# EUROPÄISCHE PATENTSCHRIFT

(11) **EP 3 623 251 B1**
(45) Veröffentlichungstag und Bekanntmachung des Hinweises auf die Patenterteilung: **27.09.2023**
(21) Anmeldenummer: 19193998.2
(22) Anmeldetag: 28.08.2019
(51) Int. Cl.: B61G 5/02

(54) **STABILISATORVORRICHTUNG FÜR SCHIENENFAHRZEUGE, INSBESONDERE WANKSTABILISATOR**
STABILIZER DEVICE FOR RAIL VEHICLES, ESPECIALLY A ROLL STABILIZER
DISPOSITIF STABILISATEUR POUR VÉHICULES FERROVIAIRES, EN PARTICULIER STABILISATEUR DE ROULIS

(30) Priorität: 17.09.2018 DE 202018105298 U
(43) Veröffentlichungstag der Anmeldung: 18.03.2020
(73) Patentinhaber: HEMSCHEIDT Engineering GmbH & Co. KG, 90537 Feucht (DE)
(72) Erfinder: SAMES, Martin, 90537 Feucht (DE); DESS, Tobias, 92318 Neumark i.d.Opf. (DE); SAMES, Christopher, 90537 Feucht (DE)
(74) Vertreter: Walther Bayer Faber Patentanwälte PartGmbB

(56) Entgegenhaltungen:
- CN-A- 107 458 413
- CN-U- 201 721 457
- DE-C- 693 928
- NL-C- 39 938
- US-A- 1 740 357

## Beschreibung

Die Erfindung betrifft eine Stabilisatorvorrichtung zur Anordnung zwischen zwei Wagenkästen eines Fahrzeugs, insbesondere betrifft die Erfindung einen Wankstabilisator oder Nickstabilisator zur Anordnung im Dachbereich zwischen den Wagenkästen eines Schienenfahrzeugs, aufweisend einen ersten Befestigungskörper zur Anordnung an einem ersten Wagenkasten und einen zweiten Befestigungskörper zur Anordnung an einem zweiten Wagenkasten, weiterhin aufweisend ein Koppelelement, mit dem die beiden Befestigungskörper und damit auch die beiden Wagenkästen miteinander gekoppelt sind.

### STAND DER TECHNIK

Die EP 2 765 050 B1 offenbart eine Stabilisatorvorrichtung zur Anordnung zwischen zwei Wagenkästen eines Schienenfahrzeugs, und die Stabilisatorvorrichtung weist Befestigungskörper zur Anordnung an den jeweiligen Wagenkasten auf. Zwischen den Befestigungskörpern ist ein Koppelelement angeordnet, über das Befestigungskörper und damit die Wagenkästen miteinander verbunden sind, um Wankbewegungen, jedoch gegebenenfalls auch Nickbewegungen zwischen den Wagenkästen zu dämpfen, zu begrenzen und/oder wenigstens zu reduzieren.

Um eine Federwirkung in der Stabilisatorvorrichtung mit zunehmendem Kraftanstieg bei einer Bewegung zwischen den Wagenkästen zu erzielen, sind die Befestigungskörper aus Blattfedern gebildet, und finden Wankbewegungen zwischen den Wagenkästen statt, werden in den Blattfedern elastische Verformungen hervorgerufen, wodurch die gewünschte Dämpfungs- und/oder Stabilisatorwirkung erzielt wird. Um die Wankbewegungen zwischen den Wagenkästen zusätzlich zu dämpfen, sind zusätzlich zu den Blattfedern Dämpferelemente angeordnet, die sich zwischen einem am Wagenkasten angeordneten Winkelstück und den Befestigungskörpern in einer Anbindungsstelle an das Koppelelement erstrecken, und wird in den Blattfedern eine elastische Verformung erzeugt, so kann diese durch einen oder mehrere Dämpfer zusätzlich gedämpft werden.

Solche vorbekannten Feder-Dämpfer-Anordnungen zur Bildung einer Stabilisatorvorrichtung rufen einen erhöhten Wartungsaufwand hervor, da die Dämpfer als Fluiddämpfer ausgeführt sind und regelmäßig ausgetauscht werden müssen. Wird der Ein- und Ausfahrweg der Dämpfer voll ausgenutzt, kommt es innerhalb des Dämpfers zu einem Anschlag, der zwar für eine Stabilisierungsvorrichtung gewünscht ist, der jedoch nachteilhafterweise in den Dämpfern stattfindet und damit einen Verschleiß der Dämpfer zusätzlich hervorruft.

Weitere Stabilisierungsvorrichtungen sind in der US 1 740 357 A, der DE 693 928 C, der NL 39 938 C, der CN 107 458 413 A und der CN 201 721 457 U offenbart.

Gewünscht ist folglich eine kostengünstige, verschleißminimale Ausgestaltung einer Stabilisatorvorrichtung, die vor allem dazu dienen soll, Wankbewegungen zwischen den Wagenkästen eines Schienenfahrzeugs zu dämpfen und damit zu reduzieren. Eine Stabilisatorvorrichtung ist insbesondere vonnöten, da das unterseitig angeordnete Gelenklager zwischen den Wagenkästen sämtliche Kräfte aufnehmen muss, die sowohl in radialer als auch in axialer Richtung zwischen den Wagenkästen auftreten. Um bei Wankbewegungen zwischen den Wagenkästen eine Verdrehung des Gelenklagers zu dämpfen und zu begrenzen, sind Stabilisatorvorrichtungen unvermeidbar, wobei neben Wankbewegungen zudem auch Nickbewegungen zwischen den Wagenkästen gedämpft werden können.

### OFFENBARUNG DER ERFINDUNG

Aufgabe der Erfindung ist die Weiterbildung und Verbesserung einer Stabilisatorvorrichtung zu Anordnung zwischen zwei Wagenkästen eines Schienenfahrzeuges, und die Stabilisatorvorrichtung soll wartungsfrei und kostengünstig ausgeführt werden. Insbesondere soll die Anordnung eines Fluiddämpfers vermieden werden, und der Anschlag der Stabilisatorvorrichtung zur Begrenzung der Wankbewegung ist möglichst robust auszuführen.

Diese Aufgabe wird ausgehend von einer Stabilisatorvorrichtung gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Befestigungskörper jeweils einen Flanschteil zur Anordnung am Wagenkasten und einen Koppelteil zur Aufnahme und Anbindung des Koppelelementes aufweisen, und wobei der Flanschteil und der Koppelteil mittels eines Drehgelenkes miteinander verbunden sind.

Kerngedanke der Erfindung ist die Anordnung eines Drehgelenkes als Bestandteil des Befestigungskörpers, und der Befestigungskörper wird zweiteilig ausgeführt, nämlich mit einem Flanschteil zur Anordnung am Wagenkasten einerseits und mit einem Koppelteil zur Anordnung an das Koppelelement andererseits. Wird das Drehgelenk erfindungsgemäß zwischen Flanschteil und Koppelteil eingebracht, so kann das Drehgelenk mit einer vorbestimmbaren elastischen Nachgiebigkeit ausgeführt werden, und das Drehgelenk wird vorzugsweise ferner mit einem Anschlag ausgeführt, sodass die Funktionen des Kraftaufbaus über der Wankbewegung im Drehgelenk erfolgen kann. Zudem besteht die vorteilhafte Möglichkeit, die Funktion eines Anschlags im Drehgelenk selbst umzusetzen, und es ist ein Fluiddämpfer nicht mehr notwendig.

Folglich ergibt sich eine Stabilisatorvorrichtung mit einer sehr robusten Ausführung, und durch die Anordnung des Drehgelenkes als Bestandteil des Befestigungskörpers können die Funktionen der Beweglichkeit und damit des Kraftaufbaus über einer Wankbewegung zwischen den Wagenkästen und die Bildung eines Anschlags bereits innerhalb des Drehgelenkes umgesetzt werden. Die so gebildete Stabilisatorvorrichtung ist wartungsfrei, robust und kostengünstig herzustellen und kann auf einfache Weise insbesondere im oberen Übergangsbereich zwischen zwei Wagenkästen eines Schienenfahrzeugs angeordnet werden. Eine Stabilisatorvorrichtung gemäß der Erfindung kann überdies auch für Straßenfahrzeuge mit wenigstens zwei Wagenkästen ausgebildet werden.

Erfindungsgemäß weist das Drehgelenk ein Dämpfungsmittel auf. Das Dämpfungsmittel dient dazu, eine elastische Nachgiebigkeit in der Drehbewegung des Flanschteils relativ zum Koppelteil zu erzeugen, wobei das Dämpfungsmittel auch das Drehgelenk selbst bilden kann. Erfindungsgemäß umfasst das Dämpfungsmittel einen elastischen Körper, beispielsweise einen Gummiwerkstoff, einen Kautschukkörper und/oder ein Elastomer, der geeignet ist, als elastischer Körper zu dienen.

Bei der erfindungsgemäßen Stabilisatorvorrichtung weist das Drehgelenk ferner einen Hülsenkörper und einen Achsenkörper auf, wobei zwischen dem Hülsenkörper und dem Achsenkörper der das Dämpfungsmittel bildende elastische Körper eingebracht ist. Der Hülsenkörper kann einteilig mit dem Koppelteil ausgeführt sein, und es ist auch denkbar, dass der Achsenkörper einteilig mit dem Flanschteil ausgebildet ist. Mit besonderem Vorteil ist der Hülsenkörper im Koppelteil feststehend aufgenommen und der Achsenkörper ist im Flanschteil feststehend aufgenommen, sodass sowohl der Hülsenkörper als auch der Achsenkörper als jeweilige Einzelelemente ausgeführt sind und mittels des elastischen Körpers miteinander verbunden sind. Das Drehgelenk kann jedoch auch lösbar am Koppelteil und am Flanschteil angeordnet sein, zum Beispiel kann das Drehgelenk in das Koppelteil eingepresst werden, sodass das Drehgelenk im Wartungsfall ausgetauscht werden kann. Die lösbare Anordnung des Drehgelenks im Koppelteil kann die auftretenden Kräfte übertragen.

Mit weiterem Vorteil weist das Drehgelenk eine Gelenkachse auf, die mit einem Verlauf quer zum Verlauf einer Längsachse des Koppelelementes ausgebildet ist. Die Drehachse bildet dabei eine Achse, in der der Koppelteil relativ zum Flanschteil verdreht werden kann. Verläuft die Längsachse des Koppelelementes beispielsweise horizontal zwischen den Wagenkästen des Schienenfahrzeugs quer zur Fahrtrichtung, so können die Gelenkachsen in den Drehgelenken der Befestigungskörper vertikal verlaufen. Die Längsachse, die im Koppelelement selbst liegt und die Erstreckungsachse des Koppelelementes angibt, muss dabei keinen Schnittpunkt mit den Gelenkachsen aufweisen, insbesondere da das Koppelelement an Endseiten des Koppelteils angebunden ist, welche Endseiten dem Drehgelenk gegenüberliegend ausgebildet sind, an dem das Koppelteil ebenfalls beteiligt ist.

Erfindungsgemäß ist das Koppelelement mittels eines Koppelgelenks beweglich an dem jeweiligen Koppelteil der Befestigungskörper angebunden. Das Koppelgelenk bildet insbesondere ein Kugelgelenk, sodass das Koppelelement beispielsweise an beiden Endseiten ein Koppelgelenk aufweist, an das die jeweiligen Koppelteile der Befestigungskörper kugelgelenkig angebunden sind.

Ein noch weiterer Vorteil wird gebildet, wenn das Koppelelement in der Länge verstellbar ausgebildet ist. Damit kann eine Justage der Stabilisatorvorrichtung erfolgen, beispielsweise zur Einstellung einer NullStellung der Wagenkästen des Schienenfahrzeugs zueinander. Die Verstellung der Länge des Koppelelementes kann dabei beispielsweise über eine Gewinde - Anordnung erfolgen. Insbesondere weist das Koppelelement hierzu eine Gewindestange auf, wobei die Gewindestange einen ersten Gewindebereich mit einem Linksgewinde und einen zweiten, gegenüberliegenden Gewindebereich mit einem Rechtsgewinde umfasst, und auf die Gewindebereiche sind Endelemente des Koppelelementes aufgeschraubt.

Das Drehgelenk wird auf vorteilhafte Weise so gebildet, dass zwischen dem Hülsenkörper und dem Achsenkörper eine Verdrehbegrenzung eingebracht ist, sodass damit die gelenkige Verdrehbewegung des Koppelteils zum Flanschteil auf einen vorgebbaren Winkelbereich begrenzt ist. Beispielsweise weist die Verdrehbegrenzung wenigstens einen am Hülsenkörper ausgebildeten und nach innen in Richtung zum Achsenkörper weisenden Vorsprung auf, der in wenigstens eine im Achsenkörper eingebrachte Aussparung hineinragt, wobei die Aussparung in Umfangsrichtung breiter ausgeführt ist als die Breite des Vorsprunges. Durch das Maß des Spaltes in Umfangsrichtung zwischen dem Vorsprung und der Aussparung kann die gewünschte maximale Verdrehbewegung eingestellt werden. Somit lässt sich insbesondere der maximale gewünschte Wankwinkel zwischen den beiden Wagenkästen einstellen.

Die gelenkintegrierte Verdrehbegrenzung ist mit dem Vorsprung und der Aussparung sehr robust ausgebildet und kann hohe Kräfte übertragen. Insbesondere ergibt sich der Vorteil, dass bei einem Anschlag der Verdrehbewegung zwischen dem Koppelteil und dem Flanschteil auftretende Kräfte nicht über den elastischen Körper übertragen werden müssen, sodass sich bei einem Anschlag der Verdrehbewegung auch keine frühzeitige Ermüdung oder gar eine Schädigung des elastischen Körpers und damit des Dämpfungsmittels ergibt.

Mit besonderem Vorteil kann über dem Hülsenkörper und dem Achskörper auf diametral gegenüberliegenden Positionen jeweils eine Verdrehbegrenzung angebracht sein, und gelangen die Vorsprünge zur Anlage in der Innenseite der Aussparung, so erfolgt eine solche Anlage auf diametral gegenüberliegenden Positionen, sodass schließlich auch keine Querkräfte oder weiteren Momente in das Drehgelenk eingeleitet werden.

Eine vorteilhafte Ausführungsform des Flanschteils sieht vor, dass der Flanschteil gabelförmig ausgebildet ist und den Achsenkörper zwischen zwei Gabelschenkeln des Flanschteils in der Gelenkachse aufnimmt. Die Gabelschenkel können zur Aufnahme des Achsenkörpers unrund ausgebildete Aufnahmeöffnungen aufweisen, in die am Achsenkörper vorhandene Aufnahmezapfen eingesetzt sind und die komplementär zu den unrund ausgebildeten Aufnahmeöffnungen ausgebildet sind, sodass eine Verdrehung der Achsenkörper um die Gelenkachse unterbunden ist. Die unrunde Ausgestaltung kann beispielsweise eine elliptische, polygonale oder sonstige Ausgestaltung annehmen.

Schließlich ist vorgesehen, dass der wenigstens eine elastische Körper in einen umlaufenden Spalt zwischen dem Hülsenkörper und dem Achsenkörper auf wenigstens einem Umfangsabschnitt einvulkanisiert ist. Damit ergibt sich eine Haftung des elastischen Körpers an der Außenseite des Achsenkörpers und an der Innenseite des Hülsenkörpers, die so stark ist, dass die großen Verdrehmomente zwischen dem Flanschteil und dem Koppelteil übertragen werden können.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht einer Stabilisatorvorrichtung in Anordnung zwischen zwei Wagenkästen eines Schienenfahrzeugs,
- Figur 2: eine perspektivische, fliegende Ansicht der Bestandteile eines Befestigungskörpers als Teil der Stabilisatorvorrichtung,
- Figur 3: eine perspektivische Ansicht eines Drehgelenkes der Befestigungskörper der Stabilisatorvorrichtung mit den Merkmalen der Erfindung,
- Figur 4: eine Schnittansicht in axialer Richtung des Drehgelenkes gemäß Figur 3,
- Figur 5a, 5b: eine Explosionsdarstellung und eine Zusammenbaudarstellung des Koppelelementes der Stabilisatorvorrichtung.

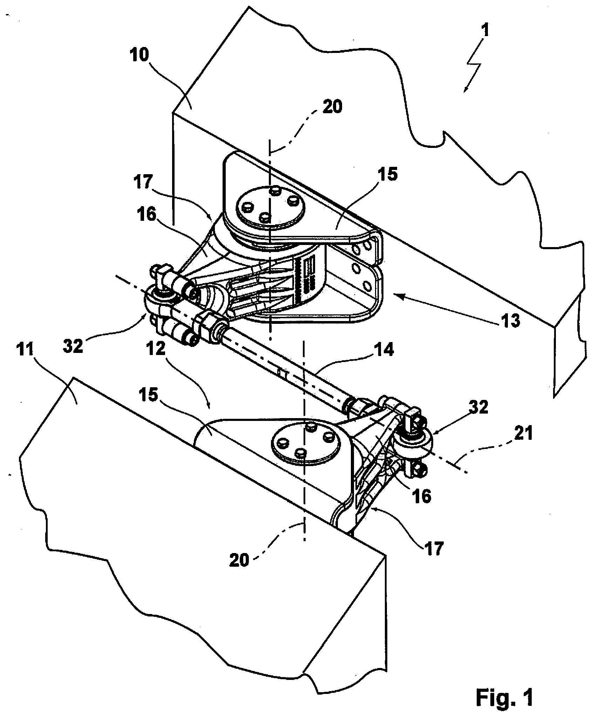

Figur 1 zeigt in einer perspektivischen Ansicht eine Stabilisatorvorrichtung 1, die zwischen zwei Wagenkästen 10 und 11 eines Schienenfahrzeugs angeordnet ist. Die Anordnung der Stabilisatorvorrichtung 1 befindet sich dabei bevorzugt im Dachbereich eines Übergangs zwischen den Wagenkästen 10 und 11 und ist an den jeweiligen Stirnseiten der Wagenkästen 10, 11 befestigt.

Die Stabilisatorvorrichtung 1 weist zu ihrer Befestigung einen ersten Befestigungskörper 12 zur Anordnung am ersten Wagenkasten 11 und einen beispielsweise baugleichen zweiten Befestigungskörper 13 zur Anordnung am zweiten Wagenkasten 10 auf. Zwischen den beiden Befestigungskörpern 12 und 13 erstreckt sich ein Koppelelement 14, mit dem die beiden Befestigungskörper 12 und 13 miteinander gelenkig gekoppelt sind. Die Anbindung des Koppelelementes 14 an die Befestigungskörper 12 und 13 erfolgt über Koppelgelenke 32, die als Kugelgelenke ausgeführt sind. Damit können die Wagenkästen 10 und 11 sowohl eine Wankbewegung als auch eine Nickbewegung und eine Knickbewegung zueinander ausführen, wobei auch eine Versatzbewegung der Wagenkästen 10 und 11 möglich ist, ohne dass es zu Verspannungen in der Stabilisatorvorrichtung 1 kommen kann.

Die Wankbewegungen der Wagenkästen 10 und 11 zueinander und damit deren Relativbewegungen erfolgen in einer Längsachse 21 des Koppelelementes 14, wodurch die eigentliche Stabilisierung der Wagenkästen 10 und 11 zueinander erfolgt, und wobei in gewissen Grenzen auch eine Stabilisierung einer Nickbewegung der Wagenkästen 10, 11 zueinander mit der Stabilisatorvorrichtung 1 erreicht werden kann.

Die Befestigungskörper 12 und 13 sind mehrteilig ausgebildet und weisen einen Flanschteil 15 zur Anordnung am jeweiligen Wagenkasten 10, 11 und einen Koppelteil 16 zur Anbindung des Koppelelementes 14 auf. Zwischen dem Flanschteil 15 und dem Koppelteil 16 befindet sich ein Drehgelenk 17. Das jeweilige Drehgelenk 17 der beiden Befestigungskörper 12, 13 weist eine Gelenkachse 20 auf, die mit einem Verlauf quer zum Verlauf der Längsachse 21 des Koppelelementes ausgebildet ist. Insbesondere verlaufen die Gelenkachsen 20 in vertikaler Richtung.

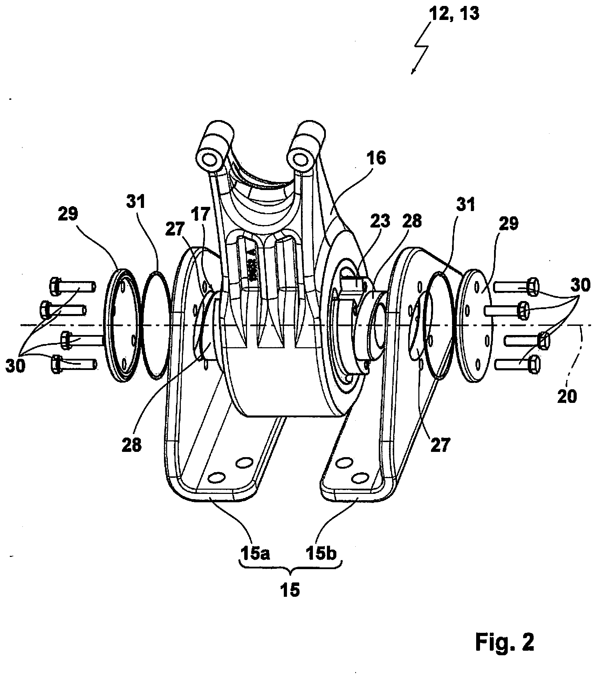

Figur 2 zeigt eine perspektivische Ansicht der Befestigungskörper 12, 13 in einer nicht montierten Anordnung, und die Befestigungskörper 12, 13 weisen Gabelschenkel 15a und 15b auf, die beispielhaft als Winkelbleche ausgebildet sind, zwischen denen ein Achsenkörper 23 aufgenommen ist. Der Koppelteil 16 ist mit einem großen Aufnahmeauge ausgebildet, durch das sich der Achsenkörper 23 hindurch erstreckt.

Der Achsenkörper 23 weist an seinen jeweiligen axialen Endseiten Aufnahmezapfen 28 auf, und die Aufnahmezapfen 28 werden in Aufnahmeöffnungen 27 eingebracht, die in den Gabelschenkeln 15a und 15b ausgebildet sind. Die Aufnahmeöffnungen 27 weisen eine unrunde Kontur auf, und die Aufnahmezapfen 28 sind komplementär zu der unrunden Kontur ebenfalls unrund ausgebildet, sodass bei einem Einsetzen der Aufnahmezapfen 28 in die Aufnahmeöffnungen 27 eine Verdrehung des Achsenkörpers 23 in der Gelenkachse 20 unterbunden ist. Beispielsweise sind die Aufnahmeöffnungen 27 und die Aufnahmezapfen 28 oval oder elliptisch ausgebildet.

Um den Achsenkörper 23 in Anordnung an den Gabelschenkeln 15a, 15b zu sichern, sind Deckelelemente 29 vorgesehen, die mit Schraubelementen 30 am jeweiligen Gabelschenkel 15a und 15b sowie dem Achsenkörper 23 axial verschraubt werden, wobei ferner Dichtelemente 31 zwischen den Deckelelementen 29 und der Seitenflächen der Gabelschenkel 15a, 15b angeordnet werden.

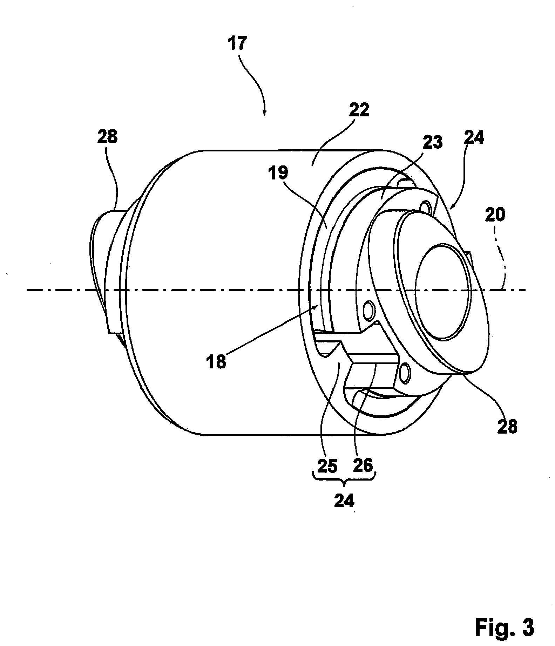

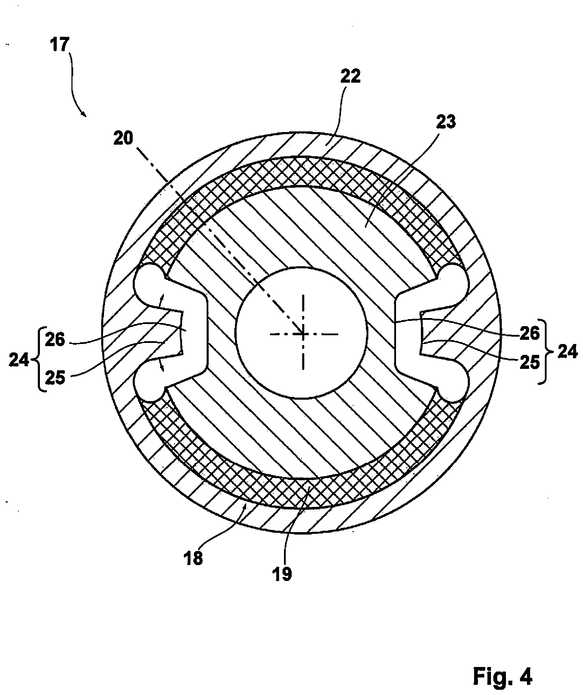

Zwischen dem Koppelteil 16 und dem Achsenkörper 23 ist das Drehgelenk 17 gebildet, das in der Figur 3 in einer Perspektive und in der Figur 4 in einer Schnittansicht detaillierter dargestellt ist.

Das Drehgelenk 17 wird gebildet durch den Hülsenkörper 22 und den Achsenkörper 23, wobei der sich der Achsenkörper 23 durch den Hülsenkörper 22 hindurch erstreckt. Im so gebildeten umlaufenden radialen Spalt zwischen dem Achsenkörper 23 und dem Hülsenkörper 22 ist ein elastischer Körper 19 eingebracht, insbesondere einvulkanisiert, und unter Aufbringung einer Torsionskraft auf den Hülsenkörper 22 kann dieser relativ zum Achsenkörper 23 unter elastischer Verformung des elastischen Körpers 19 um die Gelenkachse 20 verdreht werden.

Der elastische Körper 19 bildet ein Dämpfungsmittel 18, und je größer der Verdrehwinkel des Hülsenkörpers 22 relativ zum Achsenkörper 23 in der Gelenkachse 20 ist, desto größer wird die Verdrehkraft, die aufgebracht werden muss, um die Verdrehung weiterzuführen.

Zur Begrenzung der Verdrehung des Hülsenkörpers 22 auf dem Achsenkörper 23 um die Gelenkachse 20 dienen diametral gegenüberliegende Verdrehbegrenzungen 24. Die Verdrehbegrenzungen 24 weisen Vorsprünge 25 auf, die radial nach innen in den umlaufenden Spalt hineinragen, und die Vorsprünge 25 sind so tief ausgeführt, dass diese in Aussparungen 26 hineinragen, die an komplementärer Stelle zur Anordnung der Vorsprünge 25 im Achsenkörper 23 eingebracht sind, beispielsweise als Längsnuten auf dem Außenumfang. Wird eine Verdrehung des Hülsenkörpers 22 relativ zum Achsenkörper 23 hervorgerufen, so gelangen die Seitenflanken der Vorsprünge 25 bei einem definierten Verdrehwinkel an die Seitenwandung der Aussparungen 26, wodurch ein Festkörperanschlag zwischen Hülsenkörper 22 und Achsenkörper 23 in Umfangsrichtung erzielt wird. Das Maß des Spaltes in Umfangsrichtung zwischen den Vorsprüngen 25 und den Aussparungen 26 definiert die maximale Verdrehbewegung, bevor es zu dem Festkörperanschlag kommt. Durch die diametral gegenüberliegende Anordnung der Verdrehbegrenzungen 24 kann eine Torsionsverspannung zwischen dem Hülsenkörper 22 und dem Achsenkörper 23 ohne die Entstehung von Kippmomenten oder dergleichen erfolgen.

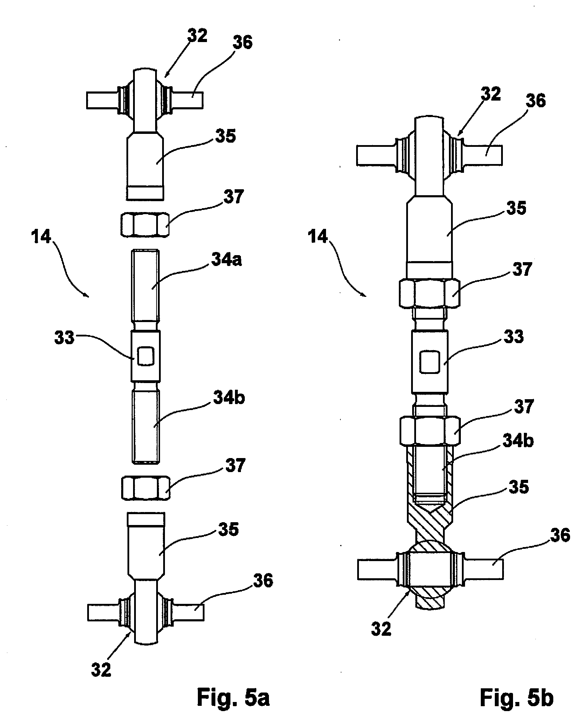

Die Figuren 5a und 5b zeigen das Koppelelement 14 in einer Explosionsdarstellung und in einer montierten Darstellung, und das Koppelelement 14 weist endseitige Koppelgelenke 32 auf, über die das Koppelelement 14 an die Befestigungskörper 12 und 13 gemäß Figur 1 gelenkig angebunden werden kann. Die Koppelgelenke 32 sind mit Gelenkbolzen 36 ausgeführt und bilden Kugelgelenke, und die Gelenkbolzen 36 können mit den Koppelteilen 16 der Befestigungskörper 12, 13 fest verbunden, insbesondere verschraubt werden.

Als wesentlicher Bestandteil weisen die Koppelelemente 14 eine Gewindestange 33 auf, und die Gewindestange 33 weist einen ersten Gewindebereich 34a und einen zweiten Gewindebereich 34b auf. Auf die Gewindebereiche 34a, 34b werden Endelemente 35 aufgeschraubt, wobei mit besonderem Vorteil die Gewindebereiche 34a und 34b jeweils ein Rechtsgewinde und ein Linksgewinde bilden. Werden die Endelemente 35 fixiert, können durch eine Drehung der Gewindestange 33 in einer Drehrichtung beide Gewindebereiche 34a, 34b in die Endelemente 35 eingeschraubt werden. Zur Fixierung der Einschraubtiefe dienen Sicherungsmuttern 37.

Durch die Gewindebereiche 34a und 34b kann der Abstand zwischen den Gelenkbolzen 36 auch im fertig montierten Zustand der Stabilisatorvorrichtung 1 zwischen den Wagenkästen 10, 11 eingestellt werden, sodass zur Sicherung der eingestellten Länge des Koppelelementes 14 lediglich noch die Sicherungsmuttern 37 mit den Endelementen 35 auf den Gewindebereichen 34a, 34b verspannt werden müssen.

Im Ergebnis ergibt sich durch das aufgeführte Ausführungsbeispiel einer Stabilisatorvorrichtung 1 eine einfache, kostengünstige und robuste Ausführung, um Wankbewegungen zwischen den Wagenkästen 10, 11 eines Schienenfahrzeugs oder beispielsweise auch eines Straßenfahrzeugs, insbesondere Bus, zu dämpfen und/oder zu reduzieren.

Das Drehgelenk 17 kann sehr robust ausgeführt werden und weist keinen Fluiddämpfer auf, über den die Dämpfungswirkung erzielt werden muss. Das Dämpfungsmittel 18 wird durch den robusten elastischen Körper 19 gebildet, der bei einer Verformung hinreichend energiedissipierend wirkt, sodass Schwingungen zwischen den Wagenkästen 10, 11 durch die Stabilisatorvorrichtung 1 vorzugsweise gedämpft bzw. getilgt werden können.

Die Erfindung beschränkt sich in ihrer Ausführung nicht lediglich auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein. Beispielsweise können die Flanschteile 15 auch einteilig mit oder als Anformung an den Stirnseiten der Wagenkästen 10, 11 ausgebildet sein, in oder an denen die Drehgelenke 17 aufgenommen sind.

### Bezugszeichenliste:

- 1: Stabilisatorvorrichtung

- 10: Wagenkasten
- 11: Wagenkasten
- 12: Befestigungskörper
- 13: Befestigungskörper
- 14: Koppelelement
- 15: Flanschteil
- 15a: Gabelschenkel
- 15b: Gabelschenkel
- 16: Koppelteil
- 17: Drehgelenk
- 18: Dämpfungsmittel
- 19: elastischer Körper
- 20: Gelenkachse
- 21: Längsachse
- 22: Hülsenkörper
- 23: Achsenkörper
- 24: Verdrehbegrenzung
- 25: Vorsprung
- 26: Aussparung
- 27: Aufnahmeöffnung
- 28: Aufnahmezapfen
- 29: Deckelelement
- 30: Schraubelement
- 31: Dichtelement
- 32: Koppelgelenk
- 33: Gewindestange
- 34a: erster Gewindebereich
- 34b: zweiter Gewindebereich
- 35: Endelement
- 36: Gelenkbolzen
- 37: Sicherungsmutter

## Patentansprüche

1. Stabilisatorvorrichtung (1) zur Anordnung zwischen einem ersten Wagenkasten (10) und einem zweiten Wagenkasten (11) eines Fahrzeugs, insbesondere Wankstabilisator zur Anordnung im Dachbereich zwischen den Wagenkästen (10, 11) eines Schienenfahrzeugs, aufweisend einen ersten Befestigungskörper (12) zur Anordnung am ersten Wagenkasten (11) und einen zweiten Befestigungskörper (13) zur Anordnung am zweiten Wagenkasten (10), weiterhin aufweisend ein Koppelelement (14), mit dem die beiden Befestigungskörper (12, 13) miteinander gekoppelt sind, wobei die Befestigungskörper (12, 13) einen Flanschteil (15) zur Anordnung am Wagenkasten (10, 11) und einen Koppelteil (16) zur Aufnahme des Koppelelementes (14) aufweisen, wobei das Koppelelement (14) mittels eines Koppelgelenks (32) beweglich an dem jeweiligen Koppelteil (16) der Befestigungskörper (12, 13) angebunden ist, und wobei der Flanschteil (15) und der Koppelteil (16) mittels eines Drehgelenkes (17) miteinander verbunden sind, wobei das Drehgelenk (17) ein Dämpfungsmittel (18) aufweist, und wobei das Dämpfungsmittel (18) wenigstens einen elastischen Körper (19) umfasst,
**dadurch gekennzeichnet,**
**dass** das Drehgelenk (17) einen Hülsenkörper (22) und einen Achsenkörper (23) aufweist, wobei zwischen dem Hülsenkörper (22) und dem Achsenkörper (23) der das Dämpfungsmittel (18) bildende elastische Körper (19) eingebracht ist.

2. Stabilisatorvorrichtung (1) nach Anspruch 1,
**dadurch gekennzeichnet,**
**dass** der elastische Körper (19) einen Gummiwerkstoff und/oder einen Kautschukkörper und/oder ein Elastomer umfasst.

3. Stabilisatorvorrichtung (1) nach einem der vorgenannten Ansprüche, **dadurch gekennzeichnet,**
**dass** das Drehgelenk (17) eine Gelenkachse (20) aufweist, die mit einem Verlauf quer zum Verlauf einer Längsachse (21) des Koppelelementes (14) ausgebildet ist.

4. Stabilisatorvorrichtung (1) nach einem der vorgenannten Ansprüche,
**dadurch gekennzeichnet,**
**dass** das Koppelgelenk (32) ein Kugelgelenk aufweist.

5. Stabilisatorvorrichtung (1) nach einem der vorgenannten Ansprüche, **dadurch gekennzeichnet,**
**dass** das Koppelelement (14) in der Länge verstellbar ausgebildet ist.

6. Stabilisatorvorrichtung (1) nach Anspruch 5,
**dadurch gekennzeichnet,**
**dass** das Koppelelement (14) eine Gewindestange (33) aufweist, wobei die Gewindestange (33) einen ersten Gewindebereich (34a) mit einem Linksgewinde und einen zweiten, gegenüberliegenden Gewindebereich (34b) mit einem Rechtsgewinde umfasst, auf die Endelemente (35) des Koppelelementes (14) aufgeschraubt sind.

7. Stabilisatorvorrichtung (1) nach einem der vorgenannten Ansprüche, **dadurch gekennzeichnet,**
**dass** der Hülsenkörper (22) im Koppelteil (16) und der Achsenkörper (23) im Flanschteil (15) jeweils feststehend aufgenommen sind.

8. Stabilisatorvorrichtung (1) nach einem der vorgenannten Ansprüche, **dadurch gekennzeichnet,**
**dass** zwischen dem Hülsenkörper (22) und dem Achsenkörper (23) eine Verdrehbegrenzung (24) eingebracht ist, sodass die gelenkige Verdrehbewegung des Koppelteils (16) zum Flanschteil (15) auf einen vorgebbaren Winkelbereich begrenzt ist.

9. Stabilisatorvorrichtung (1) nach einem der vorgenannten Ansprüche, **dadurch gekennzeichnet,**
**dass** die Verdrehbegrenzung (24) wenigstens einen am Hülsenkörper (22) ausgebildeten und nach innen in Richtung zum Achsenkörper (23) weisenden Vorsprung (25) aufweist, der in wenigstens eine im Achsenkörper (23) eingebrachte Aussparung (26) hineinragt, wobei die Aussparung (26) in Umfangsrichtung breiter ausgeführt ist als die Breite des Vorsprunges (25).

10. Stabilisatorvorrichtung (1) nach einem der vorgenannten Ansprüche, **dadurch gekennzeichnet,**
**dass** der Flanschteil (15) gabelförmig ausgebildet ist und den Achsenkörper (23) zwischen zwei Gabelschenkeln (15a, 15b) des Flanschteils (15) in der Gelenkachse (20) aufnimmt.

11. Stabilisatorvorrichtung (1) nach Anspruch 10, **dadurch gekennzeichnet,**
**dass** die Gabelschenkel (15a, 15b) zur Aufnahme des Achsenkörpers (23) unrund ausgebildete Aufnahmeöffnungen (27) aufweisen, in die am Achsenkörper (23) ausgebildete Aufnahmezapfen (28) eingesetzt sind, die komplementär zu den unrund ausgebildeten Aufnahmeöffnungen (27) ausgebildet sind, sodass eine Verdrehung des Achsenkörpers (23) um die Gelenkachse (20) unterbunden ist.

12. Stabilisatorvorrichtung (1) nach einem der einem der vorgenannten Ansprüche, **dadurch gekennzeichnet,**
**dass** der wenigstens eine elastische Körper (19) in einen umlaufenden Spalt zwischen dem Hülsenkörper (22) und dem Achsenkörper (23) auf wenigstens einem Umfangsabschnitt einvulkanisiert ist.

## Claims

1. A stabilizer device (1) for arrangement between a first railcar body (10) and a second railcar body (11) of a vehicle, in particular a roll stabilizer for arrangement in the roof region between the railcar bodies (10, 11) of a rail vehicle, having a first fastening member (12) for arrangement at the first railcar body (11) and a second fastening member (13) for arrangement at the second railcar body (10), further having a coupling element (14) by which the two fastening members (12, 13) are coupled to one another, wherein the fastening members (12, 13) have a flange part (15) for arrangement at the railcar body (10, 11) and a coupling part (16) for receiving the coupling element (14), wherein the coupling element (14) is movably linked to the respective coupling part (16) of the fastening members (12, 13) by means of a coupling joint (32), and wherein the flange part (15) and the coupling part (16) are connected to one another by means of a pivot joint (17), wherein the pivot joint (17) has a damping means (18), and wherein the damping means (18) comprises at least one elastic member (19),
**characterized in that**
the pivot joint (17) has a sleeve member (22) and an axle member (23), with the elastic member (19) forming the damping means (18) being introduced between the sleeve member (22) and the axle member (23).

2. A stabilizer device (1) in accordance with claim 1,
**characterized in that**
the elastic member (19) comprises a rubber material and/or a natural rubber member and/or an elastomer.

3. A stabilizer device (1) in accordance with one of the preceding claims,
**characterized in that**
the pivot joint (17) has a joint axis (20) that is formed with an extent transverse to the extent of a longitudinal axis (21) of the coupling member (14).

4. A stabilizer device (1) in accordance with one of the preceding claims,
**characterized in that**
the coupling joint (32) has a ball joint.

5. A stabilizer device (1) in accordance with one of the preceding claims,
**characterized in that**
the coupling member (14) is adjustable in length.

6. A stabilizer device (1) in accordance with claim 5,
**characterized in that**
the coupling element (14) has a threaded rod (33), with the threaded rod (33) comprising a first threaded region (34a) having a left-hand thread and a second oppositely disposed threaded region (34b) having a right-hand thread onto which end elements (35) of the coupling element (14) are screwed.

7. A stabilizer device (1) in accordance with one of the preceding claims,
**characterized in that**
the sleeve member (22) is received in the coupling part (16) and the axle member (23) is received in the flange part (15), each in a fixed manner.

8. A stabilizer device (1) in accordance with one of the preceding claims,
**characterized in that**
a rotation limiter (24) is introduced between the sleeve member (22) and the axle member (23) so that the articulated rotational movement of the coupling part (16) with respect to the flange part (15) is limited to a predefinable angular range.

9. A stabilizer device (1) in accordance with one of the preceding claims,
**characterized in that**
the rotational limiter (24) has at least one projection (25) that is formed at the sleeve member (22), that faces inward in the direction toward the axle member (23), and that projects into at least one cutout (26) introduced in the axle member (23), with the cutout (26) in the peripheral direction being wider than the width of the projection (25).

10. A stabilizer device (1) in accordance with one of the preceding claims,
**characterized in that**
the flange part (15) is configured in fork shape and receives the axle member (23) between two fork links (15a, 15b) of the flange part (15) in the joint axis (20).

11. A stabilizer device (1) in accordance with claim 10,
**characterized in that**
the fork limbs (15a, 15b) for receiving the axle member (23) have out of round reception openings (27) into which reception pins (28) are inserted that are formed at the axle member (23) and that are configured as complementary to the out of round reception openings (27) so that a rotation of the axle member (23) about the joint axis (20) is suppressed.

12. A stabilizer device (1) in accordance with one of the preceding claims,
**characterized in that**
the at least one elastic member (19) is vulcanized into a peripheral gap between the sleeve member (22) and the axle member (23) on at least one peripheral section.

## Revendications

1. Dispositif stabilisateur (1) destiné à être agencé entre une première caisse de wagon (10) et une seconde caisse de wagon (11) d'un véhicule, en particulier stabilisateur de roulis destiné à être agencé dans la zone de toit entre les caisses de wagon (10, 11) d'un véhicule ferroviaire, présentant un premier corps de fixation (12) destiné à être agencé sur la première caisse de wagon (11) et un second corps de fixation (13) destiné à être agencé sur la seconde caisse de wagon (10), présentant en outre un élément d'accouplement (14), au moyen duquel les deux corps de fixation (12, 13) sont accouplés l'un à l'autre, les corps de fixation (12, 13) présentant une partie bride (15) destinée à être agencée sur la caisse de wagon (10, 11) et une partie d'accouplement (16) destinée à recevoir l'élément d'accouplement (14), l'élément d'accouplement (14) étant raccordé mobile sur la partie d'accouplement (16) respective des corps de fixation (12, 13) au moyen d'une articulation d'accouplement (32), et la partie bride (15) et la partie d'accouplement (16) étant reliées l'une à l'autre au moyen d'une articulation tournante (17), l'articulation tournante (17) présentant un moyen d'amortissement (18) et le moyen d'amortissement (18) comprenant au moins un corps élastique (19),
**caractérisé en ce que**
l'articulation tournante (17) présente un corps formant manchon (22) et un corps formant axe (23), le corps élastique (19) formant le moyen d'amortissement (18) étant inséré entre le corps formant manchon (22) et le corps formant axe (23).

2. Dispositif stabilisateur (1) selon la revendication 1,
**caractérisé en ce que**
le corps élastique (19) comprend un matériau caoutchouteux et/ou un corps en caoutchouc et/ou un élastomère.

3. Dispositif stabilisateur (1) selon l'une des revendications précédentes,
**caractérisé en ce que**
l'articulation tournante (17) présente un axe d'articulation (20), qui est réalisé avec un tracé transversal au tracé d'un axe longitudinal (21) de l'élément d'accouplement (14).

4. Dispositif stabilisateur (1) selon l'une des revendications précédentes,
**caractérisé en ce que**
l'articulation d'accouplement (32) présente une articulation à rotule.

5. Dispositif stabilisateur (1) selon l'une des revendications précédentes,
**caractérisé en ce que**
l'élément d'accouplement (14) est réalisé de manière réglable en longueur.

6. Dispositif stabilisateur (1) selon la revendication 5,
**caractérisé en ce que**
l'élément d'accouplement (14) présente une tige filetée (33), la tige filetée (33) comprenant une première zone filetée (34a) avec un filet à gauche et une seconde zone filetée (34b) opposée avec un filet à droite, sur lesquelles sont vissés des éléments d'extrémité (35) de l'élément d'accouplement (14).

7. Dispositif stabilisateur (1) selon l'une des revendications précédentes,
**caractérisé en ce que**
le corps formant manchon (22) et le corps formant axe (23) sont reçus immobiles respectivement dans la partie d'accouplement (16) et dans la partie bride (15).

8. Dispositif stabilisateur (1) selon l'une des revendications précédentes,
**caractérisé en ce que**
une limitation de rotation (24) est insérée entre le corps formant manchon (22) et le corps formant axe (23), de telle sorte que le mouvement de rotation articulé de la partie d'accouplement (16) par rapport à la partie bride (15) est limité à une plage angulaire prédéfinissable.

9. Dispositif stabilisateur (1) selon l'une des revendications précédentes,
**caractérisé en ce que**
la limitation de rotation (24) présente au moins une saillie (25) réalisée sur le corps formant manchon (22) et orientée vers l'intérieur en direction du corps formant axe (23), ladite saillie dépassant dans au moins un évidement (26) ménagé dans le corps formant axe (23), l'évidement (26) étant conçu plus large dans la direction périphérique que la largeur de la saillie (25).

10. Dispositif stabilisateur (1) selon l'une des revendications précédentes,
**caractérisé en ce que**
la partie bride (15) est réalisée en forme de fourche et reçoit le corps formant axe (23) dans l'axe d'articulation (20) entre deux branches de fourche (15a, 15b) de la partie bride (15).

11. Dispositif stabilisateur (1) selon la revendication 10,
**caractérisé en ce que**
les branches de fourche (15a, 15b) pour recevoir le corps formant axe (23) présentent des ouvertures de réception (27) réalisées non rondes, dans lesquelles sont insérés des tenons de réception (28) réalisés sur le corps formant axe (23), qui sont réalisés de manière complémentaire aux ouvertures de réception (27) réalisées non rondes, de telle sorte qu'une rotation du corps formant axe (23) autour de l'axe d'articulation (20) est empêchée.

12. Dispositif stabilisateur (1) selon l'une des revendications précédentes,
**caractérisé en ce que**
l'au moins un corps élastique (19) est vulcanisé sur au moins une partie périphérique dans un espace périphérique entre le corps formant manchon (22) et le corps formant axe (23).
